# EUROPEAN PATENT SPECIFICATION

(11) **EP 2 418 405 B1**
(45) Date of publication and mention of the grant of the patent: **25.09.2013**
(21) Application number: 10382223.5
(22) Date of filing: 09.08.2010
(51) Int. Cl.: F16K 5/06, F16K 27/06

(54) **Shut-off valve for bowls with vaccum evacuation systems**
Absperrventil für Kessel mit Vakuumabführsystemen
Robinet de sectionnement pour cuvettes dotées de systèmes d'évacuation par aspiration

(43) Date of publication of application: 15.02.2012
(73) Proprietor: ALTE TRANSPORTATION, S.L., 08185 Lliça de Vall (ES)
(72) Inventor: Puebla Ribas, Didac, 08185 Llica de Vall (ES); Sarsanedas Millet, Pau, 8185 Llica de Vall (ES); Marin Garcia, Francisco, 08185 Llica de Vall (ES); Pich Martinez, David, 08185 Llica de Vall (ES); Tuset Mestre, Miquel, 08185 Llica de Vall (ES)
(74) Representative: Oficina Ponti, SLP

(56) References cited:
- GB-A- 1 356 707
- US-A- 3 334 650
- US-A- 3 367 359
- US-A- 3 722 855
- US-A- 3 843 091
- US-B1- 6 401 741

## Description

The present invention refers to a shut-off valve for bowls with vacuum evacuation systems.

### BACKGROUND OF THE INVENTION

Some transportation means, such as railways, include sanitary installations comprising a bowl connected with a vacuum device for sucking the residues in the bowl to a deposit of residual waters, and a shut-off valve placed between the bowl and the deposit of residual waters, which permits the passage of the residues to said deposit when a user drives the vacuum device.

The shut-off valve is usually closed, preventing the piping of the residues of the bowl to the deposit of residual waters, so that it always permits the deposit of residual waters to maintain the vacuum level generated by an ejector.

The shut-off valve only changes its state of usually closed to usually open when a PLC detects that a user has driven a button for discharging the residues from the bowl.

Said PLC provides the opening signal to the shut-off valve during a configurable time, generally from 0.6 to 1 second, returning said shut-off valve to its resting state (usually closed) until the next user switches the discharge button of the bowl.

This kind of shut-off valves comprise basically the following components:
- a main body including an inlet and an outlet for the passage of residues from the bowl,
- a ball valve provided with a through hole housed inside said main body, which permits the sealing between the bowl and the deposit of residual waters when its position is usually closed. To reach the open position, the ball valve rotates 90°, permitting the residues from the bowl to be sucked to the deposit of residual waters,

- driving means, such as a pneumatic driver, provided to rotate 90° the ball valve from a closed position to an open position to permit the passage of the residues through its hole to the deposit of residual waters, returning afterwards to its closed position, and
- two sealing gaskets each housed at both sides of the ball valve to guarantee the sealing at 100%.

Both gaskets are placed at each end of the main body to house between them the ball valve efficiently, so that a correct sealing is guaranteed in both senses.

The gaskets are composed by a mix of 50% of polytetrafluoroethylene or Teflon and 50% of fiberglass.

The Teflon provides flexibility to the gaskets to be well adapted to the ball valve, which makes easier the assembly of these gaskets to the main body of the valve.

The fiberglass provides rigidity to the gaskets to withstand some materials that could be trapped between the gasket and the ball valve. It must be pointed out that usually the users of these bowls throw objects such as syringes, sanitary towels, tampons, detachable razor blades, among others, which can damage or even break the sealing gaskets.

The main drawback of these gaskets is that when the material which is trapped between the ball valve and the gaskets has a resistance greater than the fiberglass, the gasket is damaged and it does not guarantee the sealing of the ball valve.

On the other hand, the shut-off valve also comprises two clamps placed respectively at the ends of the main body, which are used to integrate the valve to the bowl and to a pipe that communicates with the deposit of residual waters.

Each clamp comprises to parallel wings separated by a narrow space. The inner wing is engaged with the main body, and the external wing is engaged to the vacuum evacuation system.

Both clamps are held to the main body by four pins placed in an axial direction and one nut at each end of the pins, a total of eight nuts. To this end, the inner wing placed in contact with the main body of the valve includes four threaded holes provided to house the ends of said four pins, the respective nut being in the space between both inner and external wings. A secure and efficient holding of the whole assembly of the main body of the valve is obtained.

Document GB 1 356 707 discloses a shut-off valve comprising two clamps with parallel wings.

When preventive and corrective maintaining works are done, the internal sealing gaskets will probably be changed.

To carry out this operation firstly the shut-off valve must be detached from its position in the vacuum evacuation system, loosing four joining screws at the external wing of both clamps.

Once the assembly is removed from its position, the four nuts are detached from one of the clamps to make the pins free and to permit the separation of the main body from the clamps.

However, the nuts that hold the pins cannot be removed completely because of the narrow space between the inner and external wings of each clamp, where said nuts are placed.

This drawback forces to loose slowly each nut until the nut is completely removed from the thread of the pin.

The removal operations of the assembly of the shut-off valve and the clamps can last currently between 30 and 50 minutes according to the experience with the removal, which results in a slow and hard operation for the operator.

### SUMMARY OF THE INVENTION

The object of the shut-off valve for bowls with vacuum evacuation systems of the present invention is to solve the drawbacks present in the prior art shut-off valves, providing a shut-off valve with more resistant and efficient sealing gaskets.

The shut-off valve for bowls with vacuum evacuation systems of the present invention, which is of the kind placed between a bowl and a deposit of residual waters, comprising a main body including at opposed ends an inlet and an outlet for the passage of the residues from the bowl, a ball valve housed inside the main body between two sealing gaskets, driving means capable to rotate said ball valve from a closed position to an open position to permit the suction of the residues to the deposit of residual waters and to return said ball valve to its closed position, each of said sealing gaskets being formed in a single piece composed by polytetrafluorethylene and stainless steel powder, said valve further including two clamps placed at each of the input and output opposed ends of the main body, each clamp being provided with two parallel wings separated a space from each other, with an inner wing engaged to the main body and with an external wing engageable to the vacuum evacuation system, and said inner wings being joined to the main body by a number of pins placed axially with their threaded ends engaged to respective holes of said inner wings and a number of nuts engaged to both threaded ends of the pins, characterized in that the respective nuts being placed in the space between the inner and the external wings of each clamp, the external wing of at least one clamp comprises a number of cuts placed faced with the holes of the respective inner wing, so that the respective nuts are placed or housed in the open space defined by said cuts.

Therefore, the sealing gasket of the invention provides a balance between the flexibility, permitting the gaskets to be adjusted the maximum possible to the ball valve, and the resistance, to be higher maximum possible to prevent the damage of the gasket by any object thrown inside the bowl.

Several test have demonstrated that the gasket of the invention composed from Teflon and stainless steel is more resistant and efficient than the prior art gaskets composed from Teflon and fiberglass.

Indeed, Teflon provides flexibility to the gasket to be very well adapted to the ball valve, which makes the assembly of this gasket to the body of the valve easier, and the stainless steel provides rigidity to the gasket to withstand practically all the materials that could be trapped between the gasket and the ball valve.

Advantageously, each sealing gasket comprises between 25%-75% of polytetrafluorethylene and between 25%-75% of stainless steel powder.

Preferably, each sealing gasket comprises about 50% of polytetrafluorethylene and about 50% of stainless steel powder.

Therefore, the clamp provided with the cuts permits to detach quickly and effectively the assembly of the shut-off valve.

The detaching operation consists firstly in remove one by one the pins that hold the main body. As said pins pass through the cuts of the clamp and do not contact with the wall of the external wing of the same clamp, the detachment can be done more quickly, between 10 and 20 minutes, in comparison with the detachment time of the clamps used in the state of the art.

Advantageously, the external wing of at least one clamp comprises handgrips defined between said cuts.

Said handgrips make easier for the operator the handling of said clamp during the assembling or detaching operation.

### BRIEF DESCRIPTION OF THE DRAWINGS

To facilitate the description of what has been disclosed previously some drawings are attached in which, diagrammatically and only as a non-limitative example, a practical case of embodiment of the shut-off valve for bowls with vacuum evacuation systems of the invention is shown, in which:
Fig. 1 is a perspective view of the shut-off of the invention;
Fig. 2 is a side view of the main body of the shut-off valve;
Fig. 3 is a longitudinal section of the main body, showing the sealing gaskets of the ball valve; and
Fig. 4 is a profile view of the main body of the shut-off valve.

### DESCRIPTION OF A PREFERRED EMBODIMENT

The shut-off valve for bowls with vacuum evacuation systems of the present invention is of the kind that is placed between a bowl and a deposit of residual waters (not shown).

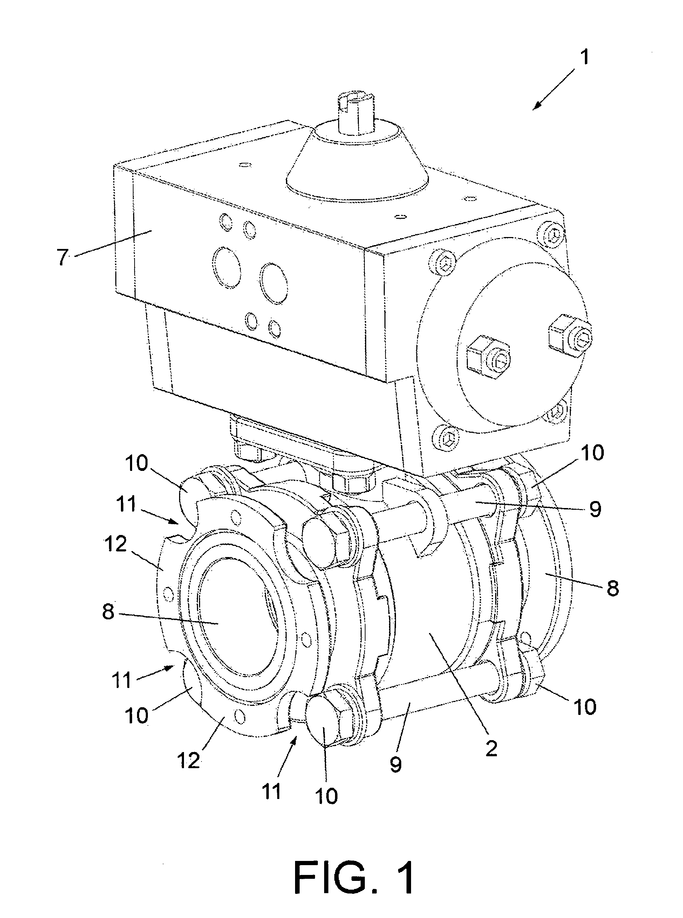

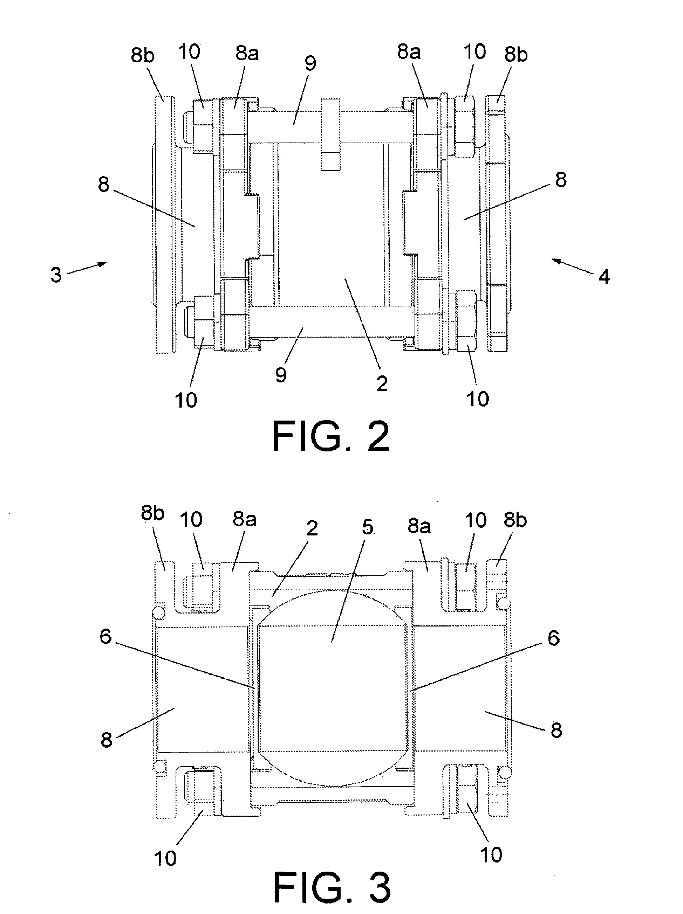

As shown in Figs. 1-4, the shut-off valve 1 comprises a main body 2 including at opposed ends an inlet 3 and an outlet 4 for the passage of the residues from the bowl, a ball valve 5 housed inside the main body 2 between two sealing gaskets 6 (see Fig. 3), and a pneumatic driver 7 that can rotate said ball valve 5 from a closed position to an open position to permit the residues to be sucked to the deposit of residual waters and to return said ball valve 5 to its closed position.

The shut-off valve 1 also comprises two clamps 8 placed each at the opposed inlet 3 and outlet 4 ends of the main body 2.

Each clamp 8 is provided with two parallel wings 8a, 8b separated a space to each other, with an inner wing 8a engaged to the main body 2 and with an external wing 8b engageable to the vacuum evacuation system.

The inner wings 8a are joined to the main body 2 by four axially placed pins 9 with their threaded ends engaged in respective holes of said inner wings 8a and a series of nuts 10 engaged to both threaded ends of the pins 9, the respective nuts 10 being placed inside the space between the inner 8a and external 8b wings of each clamp 8.

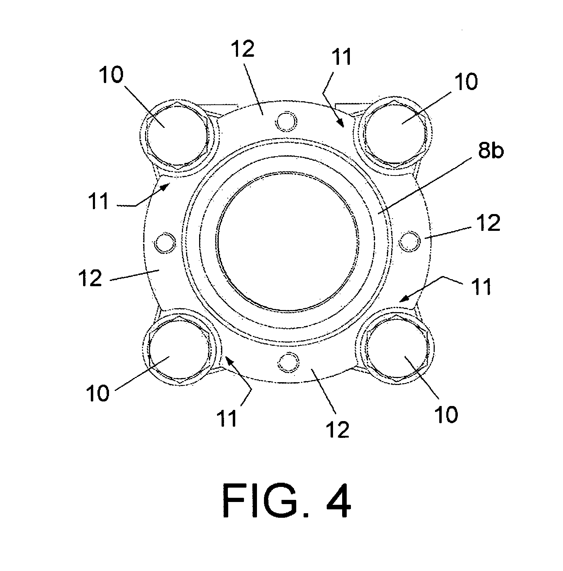

Furthermore, the external wing 8b of one of the clamps 8 comprises four cuts 11 placed in front of the holes of the respective inner wing 8a, so that the respective nuts 10 are placed in the open space defined by said cuts 11 (see Figs. 1 and 4). Therefore, the clamp 8 provided with the cuts 11 permits to detach quickly and effectively the assembly of the shut-off valve 1.

The detaching operation consists firstly in removing one by one the pins 9 holding the main body 2. As said pins 9 pass through the cuts 11 of the clamp 8 and do not contact the wall of the external wing 8b of the same clamp 8, the detachment can be done more quickly, between 10 and 20 minutes, in comparison with the detaching time needed for the prior art clamps.

Furthermore, the external wing 8b of this clamp 8 comprises handgrips 12 defined between said cuts 11. Said handgrips 12 makes easier for the operator the handling of said clamp 8 during the detaching or assembling operation.

Each sealing gasket 6 is made from a single piece composed by polytetrafluorethylene (Teflon) and stainless steel powder.

Therefore, the sealing gasket 6 provides a balance between the flexibility that permits the gaskets to be adjusted the maximum possible to the ball valve 5 and the resistance to be the higher possible to prevent that any object thrown inside the bowl to damage the gasket 6.

Several tests described hereinafter have demonstrated that the gasket 6 of the invention composed from Teflon and stainless steel is more resistant and efficient than the gaskets known in prior art composed from Teflon and fiberglass.

Indeed, Teflon provides flexibility to the gasket 6 to be very well adapted to the ball valve 5, which makes the assembly easier of this gasket 6 to the body 2 of the valve 1, and the stainless steel provides rigidity to the gasket 6 to withstand practically all the materials that could be trapped between the gasket 6 and the ball valve 5.

Each sealing gasket 6 comprises between 25% and 75% of Teflon and between 25% and 75% of stainless steel powder. Preferably, about 50% of Teflon and about 50% of stainless steel powder.

Hereinafter some tests done with the shut-off valve 1 of the invention are described.

Several tests have been carried out depositing different objects inside the bowl to check the suction efficiency of the shut-off valve 1. The tests consisted in depositing individually the following objects:
- Organic wastes and paper: using food for dogs with a consistency similar to human excrements, and two meters of toilet paper.
- Sanitary products, such as sanitary towels, tampons, condoms, washcloths, syringes, or detachable razor blades.

- Different objects of little size, such as e.g. laces, mop strips, sponges or bracelets.
- Different objects of great size, such as baizes, scourers or big syringes.

As result of these tests, the objects deposited in the bowl were correctly sucked, the toilet being completely clean after each cycle. Furthermore, the shut-off valve 1 has not suffered any damage thanks to the great resistance of the Teflon and stainless steel gaskets 6 of the present invention.

It must be pointed out that the prior art Teflon and fiberglass gaskets are capable of withstand at least 150,000 cycles, which is equivalent to about three years of useful life with 50,000 cycles/year.

However, in the practice it has been demonstrated that said gaskets are damaged before. A test has indicated that these Teflon and fiberglass gaskets are damaged after 116,793 cycles, producing leaks in the vacuum system.

A durability test has also been carried out for the Teflon and stainless steel gaskets of the invention, recording, among other data, the time the valve spends to be opened and closed in each cycle, and also the position in grades of the valve when it is open and when it is closed. With said parameters it was determined that the valve 1 has remained stable reaching 142,000 cycles with no damage.

On the other hand, another durability test was carried out consisting in:
- doing 100,000 cycles with clean water, so that each 30 seconds the automatic test system did a cycle;
- doing 100,000 cycles with water and paper:
   - every two minutes the automatic test system deposited water and paper in the bowl, then the bowl was evacuated and the water and paper remained two additional minutes;
   - every 4,000 cycles the water and the paper were changed, using two liters and 200 grams of toilet paper.

After this test, it was checked the correct operation of the valve 1 with no damage.

## Claims

1. Shut-off valve (1) for bowls with vacuum evacuation systems, of the kind placed between a bowl and a deposit of residual waters, comprising a main body (2) including at opposed ends an inlet (3) and an outlet (4) for the passage of the residues from the bowl, a ball valve (5) housed inside the main body (2) between two sealing gaskets (6), driving means (7) capable to rotate said ball valve (5) from a closed position to an open position to permit the suction of the residues to the deposit of residual waters and to return said ball valve (5) to its closed position, each of said sealing gaskets (6) being formed in a single piece composed by polytetrafluorethylene and stainless steel powder, said valve (1) further including two clamps (8) placed at each of the input (3) and output (4) opposed ends of the main body (2), each clamp (8) being provided with two parallel wings (8a, 8b) separated a space from each other, with an inner wing (8a) engaged to the main body (2) and with an external wing (8b) engageable to the vacuum evacuation system, and said inner wings (8a) being joined to the main body (2) by a number of pins (9) placed axially with their threaded ends engaged to respective holes of said inner wings (8a) and a number of nuts (10) engaged to both threaded ends of the pins (9), **characterized in that** the respective nuts (10) being placed in the space between the inner (8a) and the external (8b) wings of each clamp (8), the external wing (8b) of at least one clamp (8) comprises a number of cuts (11) placed faced with the holes of the respective inner wing (8a), so that the respective nuts (10) are placed or housed in the open space defined by said cuts (11).

2. Shut-off valve (1), according to claim 1, wherein each sealing gasket (6) comprises between 25%-75% of polytetrafluorethylene and between 25%-75% of stainless steel powder.

3. Shut-off valve (1), according to claim 2, wherein each sealing gasket (6) comprises about 50% of polytetrafluorethylene and about 50% of stainless steel powder.

4. Shut-off valve (1), according to claim 41, wherein the external wing (8b) of at least one clamp (8) comprises handgrips (12) defined between said cuts (11).

## Patentansprüche

1. Absperrventil (1) für Kessel mit Unterdruck-Abführsystemen, der Art, welches zwischen einem Kessel und einem Depot für Abwasser angeordnet ist, das einen Hauptkörper (2), welcher an gegenüberliegenden Enden einen Einlass (3) und einen Auslass (4) für den Durchfluss der Restmengen aus dem Kessel umfasst, ein Kugelventil (5), welches im Inneren des Hauptkörpers (2) zwischen zwei Flanschdichtungen (6) angeordnet ist, und Antriebsmittel (7) aufweist, welche das Kugelventil (5) von einer geschlossenen Position in eine offene Position bewegen können, um einen Sog der Restmengen in das Abwasserdepot zu gewährleisten und das Kugelventil (5) in seine geschlossene Stellung zurück zu bewegen, wobei jede der Flanschdichtungen (6) aus einem Stück geformt und aus Polyetrafluorethylen und Edelstahlpulver zusammengesetzt ist, wobei das Ventil (1) weiterhin zwei Klemmen (8) umfasst, welche an jedem Einlass (3) und Auslass (4), an den gegenüberliegenden Enden des Hauptkörpers (2), angeordnet sind, wobei jede Klemme (8) zwei parallele Flügel (8a, 8b) aufweist, welche voneinander beabstandet sind, mit einem inneren Flügel (8a), welcher mit dem Hauptkörper (2) verbunden ist, und mit einem äußeren Flügel (8b), welcher mit dem Unterdruck-Abführsystem verbindbar ist und wobei der innere Flügel (8a) mit dem Hauptkörper (2) durch mehrere Stifte (9) verbunden ist, welche axial mit ihren Gewinden mit den entsprechenden Bohrungen des inneren Flügels (8a) und mit mehreren Muttern (10) in Eingriff stehen, welche mit beiden Gewinden der Stifte (9) verbunden sind, **dadurch gekennzeichnet, dass** die entsprechenden Muttern (10) in dem Abstand zwischen dem inneren (8a) und dem äußeren (8b) Flügel jeder Klemme (8) angeordnet sind, wobei der äußere Flügel (8b) mindestens eine Klemme (8) mit mehreren Aussparungen (11) aufweist, welche gegenüberliegend den Bohrungen des entsprechenden inneren Flügels (8a) angeordnet sind, so dass die entsprechenden Muttern (10) in den Freiräumen, definiert durch die Aussparungen (11), angeordnet oder aufgenommen sind.

2. Absperrventil (1) nach Anspruch 1, wobei jede Flanschdichtung (6) zwischen 25% - 75% an Polyetrafluorethylen und zwischen 25% - 75% an Edelstahlpulver umfasst.

3. Absperrventil (1) nach Anspruch 2, wobei jede Flanschdichtung (6) in etwa 50% an Polyetrafluorethylen und in etwa 50% an Edelstahlpulver umfasst.

4. Absperrventil (1) nach Anspruch 1, wobei der äußere Flügel (8b) von mindestens einer Klemme (8) Handgriffe (12) umfasst, welche zwischen den Aussparungen (11) ausgebildet sind.

## Revendications

1. Robinet de sectionnement (1) pour cuvettes dotées de systèmes d'évacuation par aspiration, du type placéentre unecuvetteet un réservoir d'eaux usées, comprenant un corps principal (2) incluantà des extrémités opposées une entrée (3) et une sortie (4) pour le passage des résidus provenant de la cuvette, un robinet à boisseau sphérique (5) logé à l'intérieur du corps principal (2) entre deux joints d'étanchéité (6), des moyens d'entraînement (7) aptes à faire tourner ledit robinet à boisseau sphérique (5) d'une position fermée à une position ouverte pour permettre l'aspiration des résidus vers le réservoir d'eaux usées et pour ramener leditrobinet à boisseau sphérique (5) dans sa position fermée, chacun desdits joints d'étanchéité (6) étant formé en une seule pièce composée de polytétrafluoréthylène et de poudre d'acier inoxydable, leditrobinet (1) incluant en outre deuxbrides (8) placées à chacune des extrémités opposées de l'entrée (3) et de la sortie (4) du corps principal (2), chaque bride (8) étant pourvue de deux ailes parallèles (8a, 8b) écartées l'une de l'autre, avec une aile interne (8a) montée sur le corps principal (2) et avec une aile externe (8b) pouvant être montée sur le système d'évacuation par aspiration, et lesditesailes internes (8a) étant reliées au corps principal (2) par plusieurs broches (9) placées axialement avec leurs extrémités filetées engagées dans des trous respectifs desdites ailes internes (8a) et plusieurs écrous (10) montés sur les deux extrémités filetées des broches (9), **caractérisé en ce que** les écrous (10) respectifs sont placés dans l'espace entre les ailes internes (8a) et externes (8b) de chaque bride (8), l'aile externe (8b) d'au moins une bride (8) comprenant plusieurs découpes (11) placées en face des trous de l'aile interne (8a)respective, de sorte que les écrous (10) respectifs soient placés ou logés dans l'espace libre défini par lesdites découpes (11).

2. Robinet de sectionnement (1), selon la revendication 1, dans lequel chaque joint d'étanchéité (6) comprend entre 25 % et 75 % de polytétrafluoréthylène et entre 25 % et 75 % de poudre d'acier inoxydable.

3. Robinet de sectionnement (1), selon la revendication 2, dans lequel chaque joint d'étanchéité (6) comprend environ 50 % de polytétrafluoréthylène et environ 50 % de poudre d'acier inoxydable.

4. Robinet de sectionnement (1), selon la revendication 1, dans lequel l'aile externe (8b) d'au moins une bride (8) comprend des poignées (12) définies entre lesdites découpes (11).
